(19) 

**Europäisches Patentamt**
**European Patent Office**
**Office européen des brevets**

(11) **EP 4 242 981 A1**

(12) **EUROPEAN PATENT APPLICATION**

(43) Date of publication:
**13.09.2023 Bulletin 2023/37**

(21) Application number: **22161679.0**

(22) Date of filing: **11.03.2022**

(51) International Patent Classification (IPC):
**G06V 10/46** (2022.01)   **G06V 10/82** (2022.01)
**G06T 7/73** (2017.01)

(52) Cooperative Patent Classification (CPC):
**G06V 10/46; G06T 7/75; G06V 10/82**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft**
**80333 München (DE)**

(72) Inventors:
• **Shugurov, Ivan**
**81379 München (DE)**
• **Ilic, Slobodan**
**81547 München (DE)**

(74) Representative: **Siemens Patent Attorneys**
**Postfach 22 16 34**
**80506 München (DE)**

(54) **MULTI-STAGE OBJECT POSE ESTIMATION**

(57)    The invention relates to the determination of a multi-dimensional pose of an object. The respective method for estimating the multi-dimensional pose mDOF of the object OBJ utilizes a 2D image IMA of the object OBJ and a plurality of 2D templates TEMPL(i) which are generated from a 3D model MOD of the object OBJ in a rendering procedure from different known virtual viewpoints vVIEW(i). In a stage S2 of template matching, one template TEMPL(J) is identified which matches best with the image IMA. In a stage S3 of correspondence determination, a representation repTEMPL(J) of the identified template TEMPL(J) is compared with a representation repIMA of the image IMA to determine 2D-3D-correspondences 2D3D between pixels in the representation repIMA of the image IMA and voxels of the 3D model MOD of the object OBJ. The 2D-3D-correspondences are further processed in a stage S4 of pose estimation to estimate the multi-dimensional pose mDOF based on the 2D-3D-correspondences 2D3D.

FIG 2

EP 4 242 981 A1

**Description**

The invention relates to the determination of a multi-dimensional pose of an object.

Object detection and multi-dimensional pose estimation of the detected object are regularly addressed issues in computer vision since they are applicable in a wide range of applications in different domains. Just for example, autonomous driving, augmented reality, robotics, as well as several medical applications are hardly possible without fast and precise object localization in multiple dimensions.

In recent years, several computer vision tasks such as detection and segmentation have experienced a tremendous progress thanks to the development of deep learning. Successful 2D object detection alone is insufficient for real-world applications which require 6D object pose information such as in the context of augmented reality, robotic manipulation, autonomous driving etc. Therefore, the ability to recover the pose of the objects in 3D environments which is also known as the 6D pose estimation problem is essential for such applications.

The pose estimation often applies one or more pre-trained artificial neural networks ANN (for the sake of brevity, an "artificial neural network ANN" will occasionally be named "network ANN" in the following) to estimate a pose of an object in a scene based on images of that object from different perspectives and based on a comprehensive data base, e.g. described in EP3511904B1, WO2020/156836A1, EP3905194A1.

Consequently, a rapid development of high quality 6D pose estimation methods is observable thanks to advances in data preparation, evaluation tools, and the methods themselves.

However, striving for high accuracy, aspects like scalability and generalization to new objects which have not been detected before are often neglected by the top performing methods. Most of them involve lengthy annotation of real data or rendering of synthetic training data. Furthermore, a necessary step is to train the detector on a particular object to make the method object-specific.

Only few works try to generalize to new objects, but they mainly focus on objects of the same category. Others, like "CorNet" and "LSE" train networks to estimate local shape descriptors for each object's pixel. They focus on 3D corners and objects that share similar geometry, such as the ones belonging to the "T-Less" dataset. Further approaches extend to generalize to unseen objects, but they still use a standard 2D detector for object localization and estimate rotation of new unseen object by generalized template matching.

Therefore, a method and a system are required which serve the need to solve the above problems and to enable multi-dimensional object pose estimation even for newly seen objects. This is solved by the method suggested in claim 1 and by the system suggested in claim 13. Dependent claims describe further advantageous embodiments.

A method for estimating a multi-dimensional pose mDOF of an object OBJ based on an image IMA of the object OBJ, includes a a preparational stage, in which the image IMA depicting the object OBJ and a plurality of templates TEMPL(i) are provided. The templates TEMPL(i) are generated from a 3D model MOD of the object OBJ in a rendering procedure, wherein different templates TEMPL(i), TEMPL(j) with i≠j of the plurality are generated from the model MOD by rendering from different respective known virtual viewpoints vVIEW(i), vVIEW(j) on the model MOD. For example, the known virtual viewpoints vVIEW(i) might be equally distributed on a sphere enclosing the model MOD of the object OBJ, so that a pose of the model of the object in a respective template TEMPL(i) can be assumed to be known. In a stage S2 of template matching, at least one template TEMPL(J) from the plurality of templates TEMPL(i) is identified and chosen, respectively, which matches best with the image IMA. In a subsequent stage S3 of correspondence determination, a representation repTEMPL(J) of the identified template TEMPL(J), e.g. the identified template TEMPL(J) itself or, preferably, a feature map of the identified template TEMPL(J), is compared with a representation repIMA of the image IMA, e.g. the image IMA itself or a section of the respective image IMA which contains pixels which belong to the object OBJ or, preferably, a feature map of the image IMA or of such section of the image IMA, to finally determine 2D-3D-correspondences 2D3D between pixels in the representation repIMA of the image IMA belonging to the object OBJ and voxels of the 3D model MOD of the object OBJ. In a stage S4 of pose estimation, the multi-dimensional pose mDOF is estimated based on the 2D-3D-correspondences 2D3D. The fourth stage S4 of pose estimation might apply a PnP+RANSAC procedure to estimate the multi-dimensional pose mDOF from the 2D-3D-correspondences 2D3D.

For the sake of clarity, the term "stage" in the context of the method introduced herein has the meaning of a method step.

Preferably, in a stage S1 of object detection, which is preferably executed before the second stage S2 of template matching and by a trained network ANN1, a binary segmentation mask SEGM is generated from the image IMA, wherein the mask SEGM identifies those pixels of the image IMA which belong to the object OBJ and which shows a location of a visible part of the object OBJ in the image IMA, respectively.

Above and in the following, the formulation "pixels belonging to" the object OBJ or, as the case may be, to the model MOD means those pixels of a respective image IMA or TEMPL(i) which represent a respective visible part of the object OBJ or model MOD.

For the generation of the segmentation mask SEGM, a semantic segmentation is performed by ANN1 by dense matching of features of the image IMA to an object descriptor tensor $o^k$, which represents the plurality of templates TEMPL(i).

Moreover, the first stage S1 of object detection comprises a plurality of steps S1.1, S1.2, S1.4. In the first step S1.1, an object descriptor tensor $\mathbf{o}^k = \bar{F}^k_{FE}(MOD)$ for the model MOD of the object OBJ is computed by a trained network ANN1 utilizing a feature extractor $\bar{F}^k_{FE}$ from the templates TEMPL(i), wherein the object descriptor tensor $\mathbf{o}^k$ collects and represents, respectively, all templates TEMPL(i) rendered from the virtual viewpoints vVIEW(i) around the object's model MOD. In the second step S1.2, which might be executed before, after, or in parallel to the first step S1.1, feature maps $\mathbf{f}^k = F_{FE}(IMA)$ with k=1,...,K are computed by the network ANN1 utilizing a feature extractor $\mathbf{F_{FE}}$ for the image IMA. In the further step S1.4, the binary segmentation mask SEGM is computed by the network ANN1 based on a correlation tensor $\mathbf{c}^k$ which results from a comparison of image features expressed by the feature maps $\mathbf{f}^k$ of the image IMA and the object descriptor tensor $\mathbf{o}^k$.

Therein, in the further step S1.4, per-pixel correlations between the feature maps $\mathbf{f}^k$ of the image IMA and features from the object descriptor tensor $\mathbf{o}^k$ are computed, wherein each pixel in the feature maps $\mathbf{f}^k$ of the image IMA is matched to the entire object descriptor $\mathbf{o}^k$, which results in the correlation tensor $\mathbf{c}^k$, wherein a particular correlation tensor value for a particular pixel (h,w) of the image IMA is defined as $\mathbf{c}^k_{h,w,x,y,z} = \mathrm{corr}\left(\mathbf{f}^k_{h,w}, \mathbf{o}^k_{x,y,z}\right)$, wherein corr represents a correlation function, preferably, but not necessarily, according to a Pearson correlation.

The third stage S3 of correspondence determination comprise at least steps S3.1 and S3.2, executed by a by a trained network ANN3. In the first step S3.1, 2D-2D-correspondences 2D2D between the representation repTEMPL(J) of the identified template TEMPL(J) and the representation repIMA of the image IMA are computed. In the second step S3.2, the 2D-2D-correspondences 2D2D computed in the first step S3.1 are further processed under consideration of the known virtual viewpoint vVIEW(J) to provide the 2D-3D-correspondences 2D3D between pixels in the representation repIMA of the image IMA belonging to the object OBJ and voxels of the 3D model MOD of the object OBJ.

This utilizes that object OBJ poses are available for all templates TEMPL(i), including the identified template TEMPL(J), due to the known virtual camera poses vVIEW(i) corresponding to the templates TEMPL(i). Therefore, for each pixel on a template TEMPL(i), it is known to which 3D point or "voxel" of the model MOD it corresponds. Thus, 2D-3D-correspondences between a template TEMPL(i) and the model MOD are known from the outset for all templates TEMPL(i) right from the beginning, as soon as the templates TEMPL(i) have been generated for the corresponding virtual viewpoints vVIEW(i). Therefore, when 2D-2D-correspondences 2D2D between repIMA and a template TEMPL(J) are known from step S3.1, the corresponding 2D-3D-correspondences 2D3D between the image representation repIMA and the model MOD of the object can be easily derived.

In the first step S3.1, for the computation of the 2D-2D-correspondences 2D2D, the representation repIMA of the image IMA and the representation repTEMPL(J) of the identified template TEMPL(J) are correlated and the 2D-2D-correspondences 2D2D are computed by a trained artificial neural network ANN3 based on the correlation result.

Therein, in the first step S3.1, for the computation of the 2D-2D-correspondences 2D2D, the representation repIMA of the image IMA is an image feature map repIMAfm of at least a section of the image IMA which includes all pixels belonging to the object OBJ and the representation repTEMPL(J) of the identified template TEMPL(J) is a template feature map repTEMPL(J)fm of the identified template TEMPL(J).

Furthermore, in the first step S3.1 for the computation of the 2D-2D-correspondences 2D2D, a 2D-2D-correlation tensor $\mathbf{c}^k$, which is a measure for a similarity between repIMA and TEMPL(J), is computed by matching each pixel of one of the feature maps repIMAfm, TEMPL(J)fm with all pixels of the respective other feature map TEMPL(J)fm, repIMAfm, e.g. each pixel of the image feature map repIMAfm is matched with all pixels of the template feature map TEMPL(J)fm. Then, the 2D-2D-correlation tensor $\mathbf{c}^k$ is further processed by the trained artificial neural network ANN3 to determine the 2D-2D-correspondences 2D2D.

The second stage S2 of template matching for identifying the template TEMPL(J) from the plurality of templates TEMPL(i) matching best with the image IMA comprises at least steps S2.1, S2.2 and S2.3, executed by a network ANN2. In the first step S2.1, for each template TEMPL(i) a template feature map TEMPL(i)fm is computed at least for a template foreground section of the respective template TEMPL(i), which contains the pixels belonging to the model MOD, or for the whole template TEMPL(i). In the second step S2.2, a feature map IMAfm is computed at least for an image foreground section of the image IMA, which contains the pixels belonging to the object OBJ, or for the whole image IMA. The steps S2.1 and S2.2 can be performed in any desired order. In the third step S2.3, for each template TEMPL(i) and each i, respectively, a similarity sim(i) is computed for the respective template feature map TEMPL(i)fm and the image feature map IMAfm, wherein the template TEMPL(J) for which the highest similarity sim(J) is determined in the third step S2.3 is chosen to be the identified template TEMPL(J).

Therein, the image foreground section is cropped from the image IMA by utilizing the segmentation mask SEGM generated earlier. The template foreground sections of the templates TEMPL(i) are intrinsically known because the templates TEMPL(i) anyway depict the object OBJ in a known pose. Therefore, for each template TEMPL(i) a ground truth segmentation mask is available for cropping the template foreground sections from the templates.

A corresponding system for estimating a multi-dimensional pose mDOF of an object OBJ based on a representation IMA of the object OBJ, comprising a computer implemented control system is configured to execute the method described above.

The system comprises a sensor for capturing the representation IMA of the object OBJ, wherein the sensor is connected to the control system for providing the representation IMA to the control system for further processing.

Preferably, the sensor is a camera for capturing optical images, preferably RGB images.

In summary, the proposed approach introduces a multi-stage one shot object detector and multi-dimensional pose estimation framework which does not require training on the target objects but only an image and a model of the object and thus generalizes to new unseen objects. The proposed approach uses an input image IMA of the object OBJ and a 3D textured model MOD of the object OBJ as input at test time. The core aspect is to represent the 3D model MOD with a number of 2D templates TEMPL(i), e.g. in the form of RGB images, rendered from different viewpoints, e.g. on a sphere enclosing the model MOD of the object OBJ, e.g. with the model MOD in the center of the sphere. This enables CNN-based features to be directly extracted from the image IMA and jointly and densely matched against descriptors of all templates TEMPL(i). Then, an approximate object orientation is estimated via template matching. Subsequently, dense 2D-2D-correspondences are established between the detected object OBJ and the matched template of the previous step for which the virtual viewpoint and therewith the pose is known. This allows to establish dense 2D-3D-correspondences between the pixels of the image IMA of the object OBJ and the corresponding object model MOD. The final pose can be computed based on the 2D-3D-correspondences, e.g. by PnP+RANSAC algorithms (introduced below).

Advantageously, the method proposed herein is a scalable, fast one-shot multi-dimensional pose estimation method which fully generalizes to new unseen objects and scenes and does not require real data for training.

The proposed multi-stage object pose estimation method can be applied, for example, in robotic manipulation, augmented reality, visual servoing, etc. to help machines or intelligent agencies better understand the 3D environment. The multi-dimensional object pose estimation is one of the core abilities to support the machine operating in the real world. It is the bridge for these applications from the 2D images to the 3D world. By accurately localizing the objects and estimating their poses, it can improve the action taken efficiency and the task success rate.

The proposed approach has key cost and time advantages, namely no need for complicated and time-consuming data annotation step and no need to re-train the networks, based on deep neural networks, for each particular object. These features make the approach highly relevant for various applications in augmented reality, robotics, robot grasping, etc., allowing those methods to operate in more dynamic scenarios involving various objects.

More use cases of the solution proposed herein are imaginable and the concrete introduced examples must not be understood to be limiting the scope of the invention.

It is to be understood that the elements and features recited in the appended claims may be combined in different ways to produce new claims that likewise fall within the scope of the present invention. Thus, in case the dependent claims appended below depend from only a single independent or dependent claim, it is to be understood that these dependent claims can, alternatively, be made to depend in the alternative from any preceding or following claim, whether independent or dependent, and that such new combinations are to be understood as forming a part of the present specification.

In the following, possible embodiments of the different aspects of the present invention are described in more detail with reference to the enclosed figures. The objects as well as further advantages of the present embodiments will become more apparent and readily appreciated from the following description of the preferred embodiments, taken in conjunction with the accompanying figure in which:

FIG 1    shows an image IMA of a real world scene SCN with several objects, including an object OBJ of interest,
FIG 2    shows the object OBJ,
FIG 3    shows a system for pose estimation,
FIG 4    shows a scenario with known virtual camera viewpoints for generating templates TEMPL(i),
FIG 5    shows a flow chart of a method MET for pose estimation,
FIG 6    shows a flow chart of a first stage S1 of the method MET,
FIG 7    shows a flow chart of a second stage S2 of the method MET,
FIG 8    shows a flow chart of a third stage S3 and a fourth stage S4 of the method MET.

Detailed description

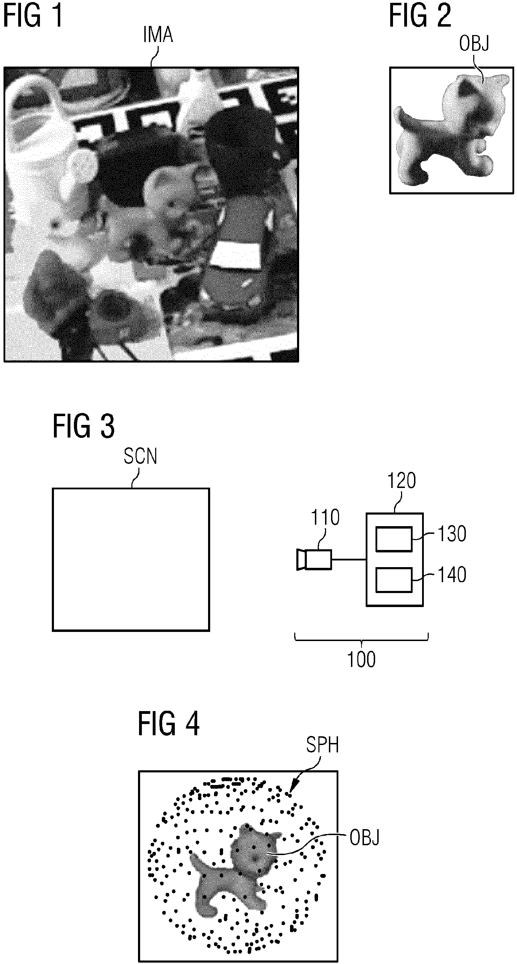

FIG 1 shows an image IMA of an exemplary real world scene SCN with a plurality of objects, including an object OBJ of interest for which the multi-dimensional pose shall be determined. The object OBJ is also depicted in FIG 2 for the sake of clarity of what the object of interest is in this exemplary case.

FIG 3 shows a system 100 including a sensor 110 for capturing a representation IMA of the object OBJ. For example, the sensor 110 can be a camera and the representation IMA can be an image, e.g. a two-dimensional RGB image. Moreover, the system 100 comprises a control system 130, e.g. implemented on and executed by a computer 120 of the system 100 by means of a respective software. The camera 110 is connected to the computer 120 so that captured images IMA can be transferred to the computer 120 for further processing by the control system 130 as described below. Such connection can be a wired or a wireless connection. The images IMA transferred to the computer 120 can be stored in a memory 140 of the computer 120 so that the control system 130 can access the images IMA from the memory 140.

A scene SCN, e.g. like the one shown in FIG 1, can be imaged by the camera 110 in order to produce an RGB image IMA to be further processed by the control system 130 as described below to estimate the multi-dimensional pose of the object OBJ in the scene SCN. The camera 110 is arranged and configured to capture the image IMA such that it at least depicts the object OBJ of interest and typically, but not necessarily, parts of its environment, possibly including further objects. As indicated, the presentation in FIG 1 might actually correspond to the appearance of such an RGB image IMA captured by the camera 110.

The captured image IMA of the object OBJ is the basis and an input, respectively, for the method MET for estimating the multi-dimensional pose mDOF of the object OBJ. In addition, the method MET utilizes as input data a three-dimensional model MOD of the object OBJ, e.g. a CAD model, which might be stored in and provided by the memory 140.

For the following, the 3D model MOD of the object OBJ is represented by a large number of 2D query templates TEMPL(i) with i=1,...,NT and NT representing the number of such templates, e.g. NT=100. Thus, the idea is to describe the 3D model MOD of the object OBJ by a number of viewpoint based templates TEMPL(i), obtained by rendering the object model MOD under different virtual rotations and perspectives, respectively. This brings the problem closer to the standard 2D one shot methods.

The individual templates TEMPL(i) are obtained by rendering the model MOD from various known virtual camera viewpoints vVIEW(i) placed on a sphere SPH enclosing the model MOD of the object OBJ, e.g. with the model MOD in the center of the sphere SPH. Such rendering is known per se and will not be detailed herein. This setup is exemplarily shown in FIG 4. Each one of the dots in FIG 4 stands for a known virtual camera viewpoint vVIEW(i) for which and from which's perspective on the model MOD a respective template TEMPL(i) is rendered. Preferably, the dots and virtual camera viewpoints are equally distributed over the surface of the sphere SPH so that the resulting entirety of templates TEMPL(i) represents views on the model MOD from each perspective, without preferred viewing directions.

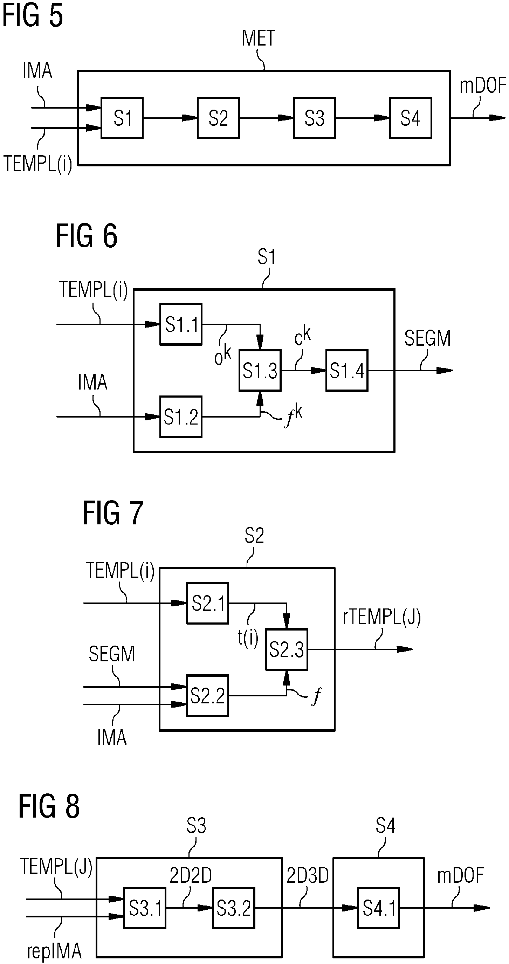

The control system 130 is configured to perform the method MET as described in the following. FIG 5 shows a high level flow chart of the method MET which is essentially a multi-stage method comprising four stages S1-S4. The detailed procedures in the individual stages S1-S4 will be described in connection with the subsequent figures. However, it might be mentioned here already that the method MET is implemented exemplarily such that each each stage of the method MET applies a separate artificial neural network ANN, in the first stage S1 for binary segmentation of the image IMA, in the second stage S2 for template matching and initial viewpoint estimation, and in the third stage S3 for 2D-2D matching.

As indicated, the inputs to the method MET and to the first stage S1, respectively, are the RGB image IMA and the 3D model MOD of the object OBJ, wherein the 3D model MOD is actually represented by the plurality of templates TEMPL(i).

In the first, "object detection" stage S1, an object segmentation conditioned on the 3D model MOD is performed or, in other words, a detection of the object OBJ represented with its textured 3D model MOD in the RGB image. For this, a semantic segmentation is performed by dense matching of features of the image IMA to an object descriptor $o^k$, which is represented by a sparse set of templates TEMPL(i) as described in connection with FIG 6. The output of the first stage S1 is a binary segmentation mask SEGM which shows the location of the visible part of the object OBJ in the input image IMA. Correspondingly, the segmentation mask has the same dimensions as the image IMA.

The semantic segmentation is preferably a one shot semantic segmentation: "One shot" detectors are a family of 2D object detection methods that generalize to new unseen objects. Such one shot detectors use two disjoint sets of object classes for training and testing. This eliminates the need for manual annotation of training data for the classes used during testing and the need to re-train the detector on them. During inference they detect a new object represented with a single template in an input target image. These methods typically use the "Siamese" network to match precomputed features from a template to a target image.

After the first stage S1, the object OBJ is localized in the image IMA, but its pose is still unknown.

The binary segmentation mask SEGM generated in the first stage S1 of the method MET functions as an input to the second stage S2 of the method MET. Additionally, the second stage S2 again uses the templates TEMPL(i) as well as the image IMA as input data.

In the second, "template matching" stage S2, an initial rotation estimation is performed via a template matching approach to a dense set of templates TEMPL(i) covering the entire virtual pose space constrained to the sphere SPH. Therewith, the second stage S2 chooses one template TEMPL(J) from the plurality of templates TEMPL(i) with $1 \leq J \leq NT$ with the highest similarity to the image IMA.

The template TEMPL(J) chosen in the second stage S2 is further processed in the third, "correspondence determination" stage S3 of the method MET together with the image IMA as an additional input. The second stage S2 includes the determination of dense 2D-3D-correspondences 2D3D between the image IMA and the 3D object model MOD by 2D-2D-correspondence matching of the image IMA to the chosen template TEMPL(J), which represents the object OBJ in the known pose. Thus, the output of the third stage S3 are the 2D-3D-correspondences 2D3D.

In the fourth, "pose estimation" stage S4, the multi-dimensional pose mDOF, preferably a 6D pose, is estimated based on the 2D-3D-correspondences 2D3D determined in the third stage S3. The estimation might apply known pose estimation procedures like "PnP" (Vincent Lepetit, Francesc Moreno-Noguer, Pascal Fua: "Epnp: An accurate o (n) solution to the pnp problem"; IJCV; 2009) in combination with "RANSAC" (Martin A Fischler, Robert C Bolles: "Random sample consensus: a paradigm for model fitting with applications to image analysis and automated cartography"; Communications of the ACM; 1981) or Kabsch (Paul J Besl, Neil D McKay: "Method for registration of 3-d shapes"; In Sensor fusion IV: control paradigms and data structures; 1992). In other words, the "PnP+RANSAC" procedure is applied to estimate the multi-dimensional pose mDOF from the 2D-3D-correspondences 2D3D.

In the following, feature maps will be introduced and further processed which are computed for various input data sets. The overall approach for feature extraction to generate feature maps foresees two feature extractors $F_{FE}^{k}$ and $\bar{F}_{FE}^{k}$ which are actually realized by the same network ANN1. Assuming that "/" denotes an image of size W×H, e.g. the image IMA or a template TEMPL(i), which implicitly depends on the object model MOD and its pose $T \in SE(3)$, the first feature extractor $F_{FE}^{k}(I) \in \mathbb{R}^{H^k \times W^k \times D^k}$ uses the pre-trained network ANN1 to compute a feature map of depth dimension $D^k$ from the image /, wherein such $F_{FE}^{k}(I)$ is used to extract features from such image $I$ in all stages of the method MET. In practice, pre-computed feature maps from several depth levels of the network ANN 1 can be used, which are indexed by $k \in N; 1 \leq k \leq N$, where $N$ is a number of convolution layers of the network ANN1. In other words, assuming that the network ANN1 is a convolutional neural network (CNN) with several layers, each layer k or at least more than one of the layers produces a feature map of its own. Later layers produce more global features because of a larger field of view, but have lower spatial resolution. Feature maps from earlier layers have higher spatial resolution but smaller field of view. $\bar{F}_{FE}^{k}(I) \in \mathbb{R}^{D^k}$ stands for a feature extractor which extends $F_{FE}^{k}$ by spatial averaging along height and width for each depth dimension of the feature map to produce a single vector of length $D^k$. In concrete, $\bar{F}_{FE}^{k}$ is used to extract features from templates TEMPL(i) in the first stage S1 of the method MET, while $F_{FE}^{k}$ is used in the second S2 and third stage S3 to extract features from templates TEMPL(i). Regarding the image IMA, $F_{FE}^{k}$ is applied in all stages for feature extraction.

Coming back to the first stage S1, FIG 6 shows a flow chart of the procedure under the first stage S1. As mentioned, the first stage S1 of the proposed method MET is responsible for one shot object localization of the object OBJ in the image IMA via binary semantic segmentation and generates a binary segmentation map SEGM.

In a first step S1.1 of the first stage S1, a 4D single descriptor tensor $\mathbf{o}^{k}$ is computed by a trained network ANN1 from the pre-rendered templates TEMPL(i), so that the input image IMA can be matched subsequently to all the templates TEMPL(i) in a single shot, as opposed to the standard one shot object detection where each query template is treated independently. The 4D descriptor tensor $\mathbf{o}^{k} = \bar{F}_{FE}^{k}(MOD) \in \mathbb{R}^{X^k \times Y^k \times Z^k \times D^k}$ collects and represents, respectively, all templates TEMPL(i) rendered from the virtual viewpoints vVIEW(i) on the sphere SPH around the object's model MOD, where the first two dimensions (X,Y) stand for a virtual camera position w.r.t. an object coordinate system, e.g. polar coordinates, while the third dimension Z stands for in-plane rotations. The 4-th dimension $D^k$ refers to feature maps extracted from each template TEMPL(i) at multiple depth levels k=1,...,K of the neural network ANN1, e.g. K=3. Each element of the descriptor tensor $\mathbf{o}^{k}$ is one viewpoint template TEMPL(i) represented with the corresponding feature map of the respective query template TEMPL(i). It is defined as $\mathbf{o}_{x,y,z}^{k} = \bar{F}_{FE}^{k}(I(R(x, y, z) \cdot MOD))$, where $I(R(x,yz) \cdot MOD)$ stands for a template TEMPL(i) and R is a rotation matrix representing a virtual viewpoint on the sphere SPH enclosing the model MOD of the object OBJ, e.g. with the model M in the center of the sphere. Actually, features from each template TEMPL(i) are precomputed using the feature extractor $\overline{F}_{FE}^k$, before they are combined to generate the tensor $\mathbf{o^k}$.

In a second step S1.2 of the first stage S1, which might be executed before, after, or in parallel to the first step S1.1, the network ANN1 computes feature maps $\mathbf{f^k} = F_{FE}(IMA) \in \mathbb{R}^{H^k \times W^k \times D^k}$ with k=1,... for the image IMA.

In a third step S1.3 of the first stage, the network ANN1 receives as an input the descriptor tensor $\mathbf{o^k}$ as well as the feature map $\mathbf{f^k}$ of the previous steps S1.1, S1.2 and predicts a correlation tensor $\mathbf{c^k}$ based on comparison of image features expressed by the feature map $f^k = F_{FE}(IMA) \in \mathbb{R}^{H^k \times W^k \times D^k}$ of the image IMA and the 4D descriptor tensor $\mathbf{o}^k = \overline{F}_{FE}^k(MOD) \in \mathbb{R}^{X^k \times Y^k \times Z^k \times D^k}$ for the model MOD of the object OBJ. This builds on the idea of dense feature matching, further extended for the task of object detection.

The core principle of the comparison in step S1.3 is to compute per-pixel correlations between the feature maps $f^k$ of the image IMA and the features from the object descriptor $\mathbf{o^k}$. Each pixel in the feature map $f^k$ of the input image IMA is matched to the entire object descriptor $\mathbf{o^k}$, which results in a correlation tensor $\mathbf{c}^k \in \mathbb{R}^{H^k \times W^k \times X^k \times Y^k \times Z^k}$. For a particular pixel (h,w) of the input image IMA, the correlation tensor value is defined as $\mathbf{c}_{h,w,x,y,z}^k = \mathrm{corr}\left(\mathbf{f}_{h,w}^k, \mathbf{o}_{x,y,z}^k\right)$. For example, "corr" might denote the "Pearson" correlation, introduced by Karl Pearson.

In step S1.4 the correlation tensor $\mathbf{c^k}$ further processed to finally generate the segmentation mask SEGM. First, the correlation tensor $\mathbf{c^k}$ is flattened to a 3D tensor $\mathbf{c}^{k\prime} \in {}_{\mathbf{c}^{k\prime} \in} \mathbb{R}^{H^k \times W^k \times (X^{\wedge}k \, Y^{\wedge}k \, Z^{\wedge}k)}$. This way, each pixel of the input image IMA feature map $f^k$ gets the list of all correlations of its feature vector with all the feature vectors of the descriptor $\mathbf{o^k}$. The 3D tensor is further processed by standard convolutional layers after that.

The flattened correlation tensor $\mathbf{c^{k'}}$ can be used in two ways. First, the computed correlations of the flattened correlation tensor $\mathbf{c^{k'}}$ are used directly as an input to the network ANN1 to produce the binary segmentation mask SEGM. For that, the flattened tensor $\mathbf{c^{k'}}$ is further processed by a $\mathbf{1 \times 1}$ convolutional layer to reduce the number of dimensions from $\mathbf{(X^kY^kZ^k)}$ to $\mathbf{L^k}$. The resulting tensor $\mathbf{c^{k''}}$ is directly used as input features to the subsequent convolutional layers of the network ANN1. As the templates TEMPL(i) are always ordered in the same way in the tensor $\mathbf{o^k}$, the network ANN1 can learn from the computed correlations during training and then generalize to unseen objects at test time.

The second use of the correlations is to compute a pixel-wise attention for the feature maps $f^k$ of the image IMA. Pixel-wise attention allows to effectively incorporate the original image IMA features into a feature tensor created by stacked tensors $\hat{f}^k$ (introduced below) and $\mathbf{c^{k''}}$ and use it for more precise segmentation.

Raw pixel-wise attention at the feature map level k is defined simply as a sum of all $\mathbf{(X^kY^kZ^k)}$ correlations for a given pixel as $A_{h,w}^k = max\{0, \sum_{j=1}^{X^k Y^k Z^k} c_{h,w,j}^k\}$.

Since simple attention can be very noisy in the early layers in comparison to later layers, conditioning attentions on the attention from the last level is proposed, which tend to be more precise but have lower resolution, and thresholding attention values below the mean value:

$$A_p^k = \begin{cases} A_p^k \, A_p^{k_l}, & if \; A_p^k > \dfrac{1}{H^k W^k} \displaystyle\sum_{p' \in A^k} A_{p'}^{k_l} \, \triangledown \, (A^{k_l})_{p'} \quad \backslash begin\{cases\} \\ 0, \; otherwise \end{cases}$$

Therein, $\triangledown$ represents a bilinear upsampling of the attention from the last level $A^{k_l}$ to the size of $A^k$. $A^{k_l}$ itself is thresholded but not conditioned on anything. All the values are scaled to lie between 0 and 1. With the attention maps at hand, feature maps $f^k$ of the image IMA are transformed as follows:

$$\hat{f}^k = A^k \cdot f^k - (1 - A^k) \cdot f^k$$

**EP 4 242 981 A1**

Subsequently, the attended features are processed by a $1 \times 1$ convolutional layer of ANN1 to decrease the dimensionality. Stacked $\hat{f}^k$ and $c^k$ are used jointly by the subsequent layers. Overall, this section of the first stage resembles the "UNet" approach (Olaf Ronneberger, Philipp Fischer, Thomas Brox: "U-net: Convolutional networks for biomedical image segmentation"; In International Conference on Medical image computing and computer-assisted intervention, 2015) of feature maps up-sampling followed by convolutional layers until the initial image size is reached. The core difference to that approach is that the network ANN1 uses stacked $\hat{f}^k$ and $c^k$ at each level instead of skip connections.

Finally, the trained network ANN1 predicts a per-pixel probability, e.g. embodied as a binary segmentation mask SEGM, that a pixel of image IMA contains a visible part of the object OBJ. For example, the per-pixel "Dice" loss might be used to train the network and handle imbalanced class distribution. The determination of the segmentation mask SEGM is equivalent to the detection of the object OBJ in the image IMA.

Thus, in training time the network ANN1 is trained by maximizing the predicted probabilities for pixels with the object OBJ and minimizing probability for pixels without the object OBJ. In test time, pixels with a predicted probability of, for example, more than 0.5 are considered as visible parts of the object OBJ.

Coming back to the second stage S2, FIG 7 shows a flow chart of the procedure under the second stage S2. The second stage S2 applies a second network ANN2 and receives and processes as input data the predicted segmentation mask SEGM of the first stage S1, the image IMA, and the templates TEMPL(i) to choose one template TEMPL(J) from the plurality of templates TEMPL(i) which matches best with the image IMA. The chosen template TEMPL(J) and the corresponding known virtual camera position and viewpoint, respectively, represent an initial viewpoint estimation.

For this initial viewpoint estimation, template matching via "manifold learning" can be applied by ANN2 which scales well to a large number of objects and which generalizes to unseen objects. For this task, the same feature extractor $F_{FE}$ is applied as in the first stage S1. However, only the features from the last layer, i.e. k=K, are employed. Moreover, one $1 \times 1$ convolutional layer can be added to decrease the dimensions from $H \times W \times D$ to $H \times W \times D^{\wedge}$.

In step S2.1 of the second stage S2, for each template TEMPL(i) a feature map TEMPL (i) $\mathrm{fm} = t(i) \in \mathbb{R}^{H \times W \times D'}$ is computed by ANN2 from a foreground section in the respective template TEMPL(i) which is representing the object OBJ in that template TEMPL(i).

In step 2.2 of the second stage S2, which might be executed before, after, or in parallel to the first step S2.1, a feature map $\mathrm{IMAfm} = f \in \mathbb{R}^{H \times W \times D'}$ is computed by ANN2 from the foreground section in the image IMA representing the object OBJ, using the segmentation mask SEGM predicted in the first stage S1 to identify such foreground section.

In each case, a "foreground section" of an image, e.g. a template TEMPL(i) in step S2.1 and the image IMA in step S2.2, denotes that section of the respective image which contains pixels belonging to the object OBJ of interest. Such foreground section can be found by applying a respective segmentation mask. W.r.t. the image IMA, the segmentation mask SEGM has been generated in the first stage S1. The templates TEMPL(i) anyway depict the object OBJ in a known pose. Therefore, for each template TEMPL(i) a ground truth segmentation mask is available. In the following, such a "foreground section" is occasionally denoted as a "patch".

Analogously to the first stage S1, similarity of two patches is estimated by ANN2 in step S2.3 of the second stage S2 by computing for each i and each template TEMPL(i), respectively, per-pixel correlations between the feature map $f$ of the foreground section of the image IMA and the feature map $t(i)$ of the foreground section of the respective template TEMPL(i), using

$$sim(i) = sim(f, t(i)) = \sum_{h,w} corr(f_{h,w}, t(i)_{h,w}).$$

As above, "corr" might denote Pearson correlation. With $f$ and $t(i)$ being tensors, correlations are separately compared for each "pixel" (h,w) and then summed up.

The template TEMPL(J) corresponding to that template feature map $t(J)$ for which the best correlation is determined, i.e. with the highest similarity to the detected object OBJ in the image IMA, is chosen as a match to be further processed in the third stage S3.

As mentioned earlier, virtual camera viewpoints and poses for each template TEMPL(i) are well known so that the matched, chosen template TEMPL(J) or at least an index or identifier ID(J) of that template TEMPL(J) gives an initial rotation estimation of the detected object and allows conclusion on the pose of the object OBJ. In any way, the output of the second stage S2 is a representation rTEMPL(J) of the chosen template TEMPL(J), e.g. the chosen template TEMPL(J) itself, an identifier ID(J) of the chosen template TEMPL(J), or the virtual viewpoint of the respective virtual camera pose to generate TEMPL(J).

8

The training of the network ANN2 aims to increase similarity for patches which depict objects with very similar rotations and at the same time penalize similarity for distant rotations. A specific query template TEMPL(J) with the highest similarity to the detected object in the target image IMA is chosen as a best match at test time. A modified triplet loss with dynamic margin is leveraged by optimizing

$$L_{triplets} = max\{0, 1 - \frac{sim(f^{anchor}, f^+)}{sim(f^{anchor}, f^-) + m}.$$

Therein, m is set to the angle between rotations of the object in the anchor and the puller patches. Using the terminology from "3d object instance recognition and pose estimation using triplet loss with dynamic margin" by Sergey Zakharov, Wadim Kehl, Benjamin Planche, Andreas Hutter, Slobodan Ilic in IROS, 2017, $f^{anchor}$ is descriptor of a randomly chosen object patch. $f^+$ corresponds to a puller -a template in the pose very similar to the pose in the anchor, while $f^-$ corresponds to the pusher with a dissimilar pose.

During training of ANN2, the rotation matrix is converted from an egocentric to an allocentric coordinate system. This conversion ensures that the visual appearance of the object is dependent exclusively on the rotational component of the SE(3) pose.

Coming back to the third stage S3, FIG 8 shows a flow chart of the procedure under the third stage S3. The third stage S3 applies a third network ANN3 to process input data comprising the representation rTEMPL(J) from the second stage S2 and the image IMA to generate 2D-2D-correspondences 2D2D of TEMPL(J) and IMA and to generate 2D-3D-correspondences 2D3D from those 2D-2D-correspondences 2D2D.

Thus, the goal of the third stage S3 is to provide necessary data to enable the multi-dimensional pose estimation in the fourth stage S4 which can be based the 2D-3D-correspondences 2D3D.

In more detail, after the initial viewpoint estimation of the second stage S2, resulting in the identification of the matched, chosen template TEMPL(J), the image IMA with the detected object OBJ, the pose of which is not known, is available as well as the matched template TEMPL(J), the pose of which is known. The trained network ANN3 computes in a first step S3.1 of the third stage S3 dense 2D-2D correspondences 2D2D between the image and its representation repIMA, respectively, and the chosen template TEMPL(J). Therein, the representation repIMA of the image IMA can be the image IMA itself or, preferably, a section of the respective image IMA which contains pixels which belong to the object OBJ, i.e. a "patch" in the wording introduced above. The patch and the representation repIMA, respectively, can be generated from the whole image IMA by utilizing the segmentation mask SEGM.

The 2D-2D correspondences 2D2D are computed based on this input repIMA and TEMPL(J). Preferably, this essentially means that corresponding feature maps repIMAfm, TEMPL(J)fm of repIMA and TEMPL(J) are computed as introduced above and correlated and the network ANN3 predicts the 2D-2D-correspondences 2D2D for repIMA and TEMPL(J) based on the correlation of those feature maps repIMAfm, TEMPL(J)fm.

Therein, the architecture of the 2D-2D matching for determining the 2D-2D-correspondences 2D2D follows the general idea of dense feature matching. Each pixel of the feature map $f^k$=repIMAfm of the image representation repIMA is matched with all pixels of the template feature map $t^k$=TEMPL(J)fm of the chosen template TEMPL(J) to form a 2D-2D-correlation tensor $c^k$. The 2D-2D-correlation tensor $c^k$ does not yet represent the 2D-2D-correspondence 2D2D, but it is a measure for the similarity between repIMA and TEMPL(J). Then, the network ANN3, which is trained to predict 2D-2D-correspondences from the 2D-2D-correlation tensor $c^k$, computes the 2D-2D-correspondences 2D2D. To be more concrete, the network ANN3 processes the 2D-2D-correlation tensor $c^k$ to predict three values for each pixel of the image representation repIMA, namely a binary foreground / background segmentation mask, which is required to show which points of the object are visible in the template TEMPL(J), and a 2D coordinate of the corresponding pixel on the template TEMPL(J), and, in other words, a probability that the particular pixel is visible in the template TEMPL(J) and two values for the coordinate of the corresponding point on the template TEMPL(J).

Based on the 2D-2D-correspondences 2D2D, the network ANN3 can provide 2D-3D-correspondences 2D3D between the object pixels in repIMA and the corresponding voxels of the 3D model MOD of the object OBJ in the second step S3.2 of the third stage S3. This utilizes that object OBJ poses are available for all templates TEMPL(i), including the chosen template TEMPL(J), due to the known virtual camera poses vVIEW(i) corresponding to the templates TEMPL(i). Therefore, for each pixel on a template TEMPL(i), it is known to which 3D point or "voxel" on the model MOD it corresponds. Thus, 2D-3D-correspondences between a template TEMPL(i) and the model MOD are known for all templates TEMPL(i). Therefore, when 2D-2D-correspondences 2D2D between repIMA and a template TEMPL(J) are known, the corresponding 2D-3D-correspondences 2D3D between the image representation repIMA and the model MOD of the object can be easily derived.

The network ANN3 is trained in a fully supervised manner. During training, a random object crop image $I_{obj}$ with its associated pose $T_{obj} \in SE(3)$ is sampled from a synthetic dataset. Then, a random template $I_{tmp}$ is picked together with its pose $T_{tmp} \in SE(3)$, so that $T_{obj}$ and $T_{tmp}$ are relatively close. Availability of object poses allows to compute per-pixel 2D-3D-correspondence maps for both patches. Let $C: M \times SE(3) \to [0,1]^{W \times H \times 3}$ denote 2D-3D-correspondences for the object rendered in the given pose $T_{obj} \in SE(3)$. Correspondences are computed as "Normalized Object Coordinates" (NOCS). Its inverse $C^{-1}$ recomputes correspondences with respect to the unnormalized object coordinates, which correspond to the actual 3D object coordinates. It allows to define a 2D correspondence pair distance in the model's 3D coordinate space:

$$d(p, p') = \left\| C^{-1}\left(I_{obj}\right)_p - C^{-1}\left(I_{tmp}\right)_{p'} \right\|_2$$

Therein, $p$ and $p'$ are pixel coordinates in the image and template patches, respectively. Ground truth dense 2D-2D-correspondences are established by simply matching pixel pairs which correspond to the closest points in the 3D coordinate system of the model. More formally, for a point $p \in I_{obj}$ its corresponding template point is computed as

$$p' = arg\, min_{p' \in I_{tmp}}\, d(p, p').$$

Due to the random sampling, an outlier aware rejection is employed for 2D-2D-correspondences with large spatial discrepancy.

Analogously to the one-shot localization, the segmentation loss is defined as a per-pixel "Dice" loss. Atop of that, the network predicts a discrete 2D coordinate using a standard cross-entropy classification loss, because dense correspondence prediction tends to work better if correspondence estimation is posed as a classification problem.

Coming back to the fourth stage S4, FIG 8 also shows a flow chart of the procedure under the fourth stage S4. The fourth stage S4 applies a fourth network ANN4 to process the 2D-3D-correspondences 2D3D generated in the third stage S3 to estimate the multi-dimensional pose mDOF, e.g. six-dimensional 6DOF, of the object OBJ in step S4.1 of the fourth stage S4. For this, the network ANN4 applies known techniques, e.g. PnP+RANSAC.

In concrete, templates TEMPL(i) can be rendered at 25 frames per second with 128x128 resolution and models downsampled to 5K faces on a standard NVIDIA Geforce RTX 2080 TI. With standard equipment, it takes around one hour to render 90K templates for the second stage S2 of the network. However, additional ablation studies showed that using 5K templates instead of 90K results in similar performance. Rendering 5K templates takes 200 seconds. The process has to be done only once for each new object.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description. Thus, the invention is not restricted to the above illustrated embodiments but variations can be derived by a person skilled in the art without deviation from the scope of the invention.

**Claims**

1. Method for estimating a multi-dimensional pose mDOF of an object OBJ based on an image IMA of the object OBJ, wherein

   - in a preparational stage, the image IMA depicting the object OBJ and a plurality of templates TEMPL(i) are provided, wherein the templates TEMPL(i) are generated from a 3D model MOD of the object OBJ in a rendering procedure, wherein different templates TEMPL(i), TEMPL(j) with i≠j of the plurality are generated by rendering from different known virtual viewpoints vVIEW(i), vVIEW(j) on the model MOD,

   wherein

   - in a stage S2 of template matching, at least one template TEMPL(J) from the plurality of templates TEMPL(i) is identified which matches best with the image IMA,
   - in a stage S3 of correspondence determination, a representation repTEMPL(J) of the identified template TEMPL(J) is compared with a representation repIMA of the image IMA to determine 2D-3D-correspondences 2D3D between pixels in the image IMA and voxels of the 3D model MOD of the object OBJ,
   - a stage S4 of pose estimation, in which the multi-dimensional pose mDOF is estimated based on the 2D-3D-correspondences 2D3D.

2. Method according to claim 1, wherein in a stage S1 of object detection, preferably executed before the second stage S2 of template matching, a segmentation mask SEGM is generated from the image IMA which identifies those pixels of the image IMA which belong to the object OBJ.

3. Method according to claim 2, wherein for the generation of the segmentation mask SEGM a semantic segmentation is performed by dense matching of features of the image IMA to an object descriptor tensor $\mathbf{o^k}$, which represents the plurality of templates TEMPL(i).

4. Method according to any one of claims 2 to 3, wherein in the stage S1 of object detection

   - in a first step S1.1 an object descriptor tensor $\mathbf{o^k} = \overline{F}_{FE}^k(MOD)$ for the model MOD of the object OBJ is computed utilizing a feature extractor $\overline{F}_{FE}^k$ from the templates TEMPL(i), wherein the object descriptor tensor $\mathbf{o^k}$ represents all templates TEMPL(i),
   - in a second step S1.2 feature maps $\mathbf{f^k} = F_{FE}(IMA)$ are computed utilizing a feature extractor $\mathbf{F_{FE}}$ for the image IMA,
   - in a further step S1.4 the binary segmentation mask SEGM is computed based on a correlation tensor $\mathbf{c^k}$ which results from a comparison of image features expressed by the feature maps $\mathbf{f^k}$ of the image IMA and the object descriptor tensor $\mathbf{o^k}$.

5. Method according to claim 4, wherein in the further step S1.4 per-pixel correlations between the feature maps $\mathbf{f^k}$ of the image IMA and features from the object descriptor tensor $\mathbf{o^k}$ are computed, wherein each pixel in the feature maps $\mathbf{f^k}$ of the image IMA is matched to the object descriptor $\mathbf{o^k}$, which results in the correlation tensor $\mathbf{c^k}$, wherein a particular correlation tensor value for a particular pixel (h,w) of the image IMA is defined as

   $$\mathbf{c_{h,w,x,y,z}^k} = \mathrm{corr}\big(\mathbf{f_{h,w}^k}, \ \mathbf{o_{x,y,z}^k}\big)$$ , wherein corr represents a correlation function, preferably according to a Pearson correlation.

6. Method according to any one of claims 1 to 5, wherein the stage S4 of pose estimation applies a PnP+RANSAC procedure to estimate the multi-dimensional pose mDOF from the 2D-3D-correspondences 2D3D.

7. Method according to any one of claims 1 to 6, wherein in the stage S3 of correspondence determination

   - in a first step S3.1, 2D-2D-correspondences 2D2D between the representation repTEMPL(J) of the identified template TEMPL(J) and the representation repIMA of the image IMA are computed BY A TRAINED NETWORK ANN3,
   - in a second step S3.2, the 2D-2D-correspondences 2D2D are further processed under consideration of the known virtual viewpoint vVIEW(J) to provide the 2D-3D-correspondences 2D3D between pixels in the image IMA belonging to the object OBJ and voxels of the 3D model MOD of the object OBJ.

8. Method according to claim 7, wherein, in the first step S3.1 for the computation of the 2D-2D-correspondences 2D2D, the representation repIMA of the image IMA and the representation repTEMPL(J) of the identified template TEMPL(J) are correlated and the 2D-2D-correspondences 2D2D are computed based on the correlation result.

9. Method according to any one of claims 7 to 8, wherein in the first step S3.1 for the computation of the 2D-2D-correspondences 2D2D

   - the representation repIMA of the image IMA is an image feature map repIMAfm of at least a section of the image IMA which includes pixels belonging to the object OBJ and
   - the representation repTEMPL(J) of the identified template TEMPL(J) is a template feature map repTEMPL(J)fm of the identified template TEMPL(J).

10. Method according to claim 9, wherein, in the first step S3.1 for the computation of the 2D-2D-correspondences 2D2D,

    - a 2D-2D-correlation tensor $\mathbf{c^k}$ is computed by matching each pixel of one of the feature maps repIMAfm, TEMPL(J)fm with all pixels of the respective other feature map TEMPL(J)fm, repIMAfm,
    - the 2D-2D-correlation tensor $\mathbf{c^k}$ is further processed to determine the 2D-2D-correspondences 2D2D.

11. Method according to any one of claims 1 to 10, wherein in the stage S2 of template matching for identifying the template TEMPL(J) from the plurality of templates TEMPL(i) matching best with the image IMA,

> - in a first step S2.1
> for each template TEMPL(i) a template feature map TEMPL(i)fm is computed at least for a template foreground section of the respective template TEMPL(i), which contains the pixels belonging to the model MOD,
> - in a second step S2.2
> a feature map IMAfm is computed at least for an image foreground section of the image IMA, which contains the pixels belonging to the object OBJ,
> - in a third step S2.3
> for each template TEMPL(i) a similarity sim(i) is computed for the respective template feature map TEMPL(i)fm and the image feature map IMAfm,

wherein the template TEMPL(J) for which the highest similarity sim(J) is determined in the third step S2.3 is chosen to be the identified template TEMPL(J).

12. Method according to claim 11, wherein the image foreground section is cropped from the image IMA by utilizing the segmentation mask SEGM generated by the method according to any one of claims 2 to 5.

13. System for estimating a multi-dimensional pose mDOF of an object OBJ based on a representation IMA of the object OBJ, comprising a computer (120) implemented control system (130) which is configured to execute a method according to any one of claims 1 to 12.

14. System according to claim 13, comprising a sensor (110) for capturing the representation IMA of the object OBJ, wherein the sensor (130) is connected to the control system (130) for providing the representation IMA to the control system (130) for further processing.

15. System according to claim 14, wherein the sensor (110) is a camera for capturing optical images, preferably RGB images.

# FIG 1

IMA

# FIG 2

OBJ

# FIG 3

SCN

110   120   130   140   100

# FIG 4

SPH

OBJ

## FIG 5

## FIG 6

## FIG 7

## FIG 8

Europäisches Patentamt

European Patent Office

Office européen des brevets

## EUROPEAN SEARCH REPORT

**Application Number**

**EP 22 16 1679**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/026917 A1 (LIAO SHUAI [NL] ET AL) 24 January 2019 (2019-01-24) * figures 7-12 * * paragraphs [0068], [0076] – [0085], [0112] – [0122] * | 1-15 | INV. G06V10/46 G06V10/82 G06T7/73 |

TECHNICAL FIELDS SEARCHED (IPC)

G06V
G06T

The present search report has been drawn up for all claims

| Place of search | Date of completion of the search | Examiner |
|---|---|---|
| The Hague | 18 August 2022 | Borges, Pedro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 16 1679

This annex lists the patent family members relating to the patent documents cited in the above-mentioned European search report.
The members are as contained in the European Patent Office EDP file on
The European Patent Office is in no way liable for these particulars which are merely given for the purpose of information.

18-08-2022

| Patent document cited in search report | Publication date | Patent family member(s) | Publication date |
|---|---|---|---|
| US 2019026917 A1 | 24-01-2019 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3511904 B1
- WO 2020156836 A1
- EP 3905194 A1